# EUROPEAN PATENT APPLICATION

(11) **EP 2 557 533 A1**
(43) Date of publication of application: **13.02.2013**
(21) Application number: 11766007.6
(22) Date of filing: 08.04.2011
(51) Int. Cl.: G06Q 30/00

(54) **SPECIFICATION DETERMINATION SYSTEM, SPECIFICATION DETERMINATION METHOD, AND SPECIFICATION DETERMINATION PROGRAM**

(30) Priority: 09.04.2010 JP 2010090320
(71) Applicant: Mitsubishi Heavy Industries, Ltd., Tokyo 108-8215 (JP)
(72) Inventor: FUTAHASHI, Kensuke, Tokyo 108-8215 (JP); KOGA, Yoshiyuki, Tokyo 108-8215 (JP); NISHIMOTO, Nobuhide, Tokyo 108-8215 (JP)
(74) Representative: Henkel, Breuer & Partner
(86) International application number: PCT/JP2011/058882
(87) International publication number: WO 2011/126107

(57) **Abstract**

An object is to easily set product specifications according to a client's requirements. A specification setting system (1) that sets a specification of a product including at least one component, which is an element meeting a need, includes a storage unit (3) that stores previous specification records, which include a previous specification that is set according to a previous need, and information about a delivery date and price for the previous specification, and component information, in which each component is associated with information about a delivery date and price of the component; an estimation unit (21) that estimates a delivery date and price for a new specification on the basis of the component information and the new specification, which is a new specification meeting a new need; and a presentation unit (23) that presents new specification information that includes the new specification and the delivery date and price for the new specification, and a previous specification record that matches a predetermined comparison condition and that is read out of the storage unit (3) in a manner allowing comparison thereof, and, when the new specification information is changed, presents the new specification information after the change, in addition to the new specification information before the change.

## Description

### {Technical Field}

The present invention relates to a specification setting system, a specification setting method, and a specification setting program.

### {Background Art}

Industrial vehicles, such as forklift trucks, have various specifications depending on the client's transport requirements and intended use, and thus, such vehicles are customized products to which various attachments are added or changed. Furthermore, because the specifications vary from client to client, the price and the delivery date are set for each client. Thus, conventionally, a sales representative informed of various specifications sets the detailed specifications for the client through negotiations with the client. PTL 1 proposes a sales support system that requires detailed specifications for the client to be inputted and sets detailed specifications for the client on-line on the basis of all of the specifications stored in a database.

### {Citation List}

### {Patent Literature}

{PTL 1} Japanese Unexamined Patent Application, Publication No. 2002-140568

### {Summary of Invention}

### {Technical Problem}

However, the method disclosed in PTL 1 has a problem in that, if the number of input conditions is large, as in the case of industrial vehicles, operators who perform inputting become confused and are unable to easily set product specifications.

The present invention has been made in view of these circumstances, and an object thereof is to provide a specification setting system, a specification setting method, and a specification setting program, with which product specifications according to a client's requirements can be easily set.

### {Solution to Problem}

To solve the above-described problem, the present invention employs the following solutions.
A first aspect of the present invention provides a specification setting system that sets a specification of a product including at least one component, which is an element meeting a need. The system includes a storage unit for storing previous specification records, which include a previous specification that is set according to a previous need and information about a delivery date and price for the previous specification, and component information, in which each component is associated with information about a delivery date and price of the component; an estimation unit for estimating a delivery date and price for a new specification on the basis of the component information and the new specification, which is a new specification meeting a new need; and a presentation unit for presenting new specification information that includes the new specification and the delivery date and price for the new specification and a previous specification record that matches a predetermined comparison condition and that is read out of the storage unit in a manner allowing comparison thereof. When the new specification information is changed, the presentation unit presents the new specification information after the change, in addition to the new specification information before the change.

With this configuration, the previous specification records, which include the previous specification that is set according to the previous need, and information about a delivery date and price for the previous specification, and the component information, in which each component of a product (for example, an industrial vehicle) is associated with a delivery date and price, are stored in the storage unit, and a delivery date and price of a specification meeting a new need are estimated on the basis of the component information read out of the storage unit. When the new specification information, which is presented such that it can be compared with the previous specification record that matches a predetermined comparison condition and that is read out of the storage unit, is changed, the new specification information after the change is presented in addition to the new specification information before the change.

Thus, because the previous specification and the new specification are presented, along with their corresponding delivery date and price, in a manner allowing comparison thereof, the price and delivery date for the new specification can be easily compared with those for the previous specification. Furthermore, because the new specification information after the change is presented in addition to the new specification information before the change, by, for example, changing the component of the new specification using the delivery date and price for the previous specification record as the target, the delivery date and price for the new specification can be adjusted so as to approach the target as closely as possible. Thus, the operator who sets the specification of a product can easily set a specification meeting the components, price, and delivery date required by the client.

It is preferable that the presentation unit of the specification setting system according to the first aspect of the present invention generate a graph whose axes correspond to the delivery date and the price and presents the new specification information and the previous specification record on the graph in a manner allowing comparison thereof.
Using the graph, the delivery date and price for the new specification can be compared with the delivery date and price for the previous specification, and a user can visually understand the new specification and the previous specification.

The system may further include an estimate generation unit that generates an estimate on the basis of information about the component, price, and delivery date of the new specification presented by the presentation unit of the specification setting system according to the first aspect of the present invention.
Because the estimate is generated on the basis of the information presented by the presentation unit, even if, for example, the delivery date and the price are changed every time a component of the new specification is changed, an estimate can be generated each time, and thus, a plurality of estimates can be easily generated.

A second aspect of the present invention is a specification setting method for setting a specification of a product including at least one component, which is an element meeting a need. The method includes an estimation stage of reading out component information from a storage unit for storing previous specification records, which include a previous specification that is set according to a previous need and information about a delivery date and price for the previous specification, and component information, in which each component is associated with information about a delivery date and price of the component, and estimating a delivery date and price for a new specification on the basis of the component information and the new specification, which is a new specification meeting a new need; a presentation stage of presenting new specification information that includes the new specification and the delivery date and price for the new specification and a previous specification record that matches a predetermined comparison condition and that is read out of the storage unit in a manner allowing comparison thereof; and a presented-information changing stage of presenting the new specification information after the change, in addition to the new specification information before the change, when the new specification information is changed.

A third aspect of the present invention is a specification setting program for setting a specification of a product including at least one component, which is an element meeting a need, and for causing a computer to execute: estimation processing for reading out component information from a storage unit for storing previous specification records, which include a previous specification that is set according to a previous need and information about a delivery date and price for the previous specification, and component information, in which each component is associated with information about a delivery date and price of the component, and estimating a delivery date and price for a new specification on the basis of the component information and the new specification, which is a new specification meeting a new need; presentation processing for presenting new specification information that includes the new specification and the delivery date and price for the new specification and a previous specification record that matches a predetermined comparison condition and that is read out of the storage unit in a manner allowing comparison thereof; and a presented-information changing processing for presenting the new specification information after the change, in addition to the new specification information before the change, when the new specification information is changed.

### {Advantageous Effects of Invention}

The present invention has an advantage in that it is possible to easily set product specifications according to a client's requirements.

### {Brief Description of Drawings}

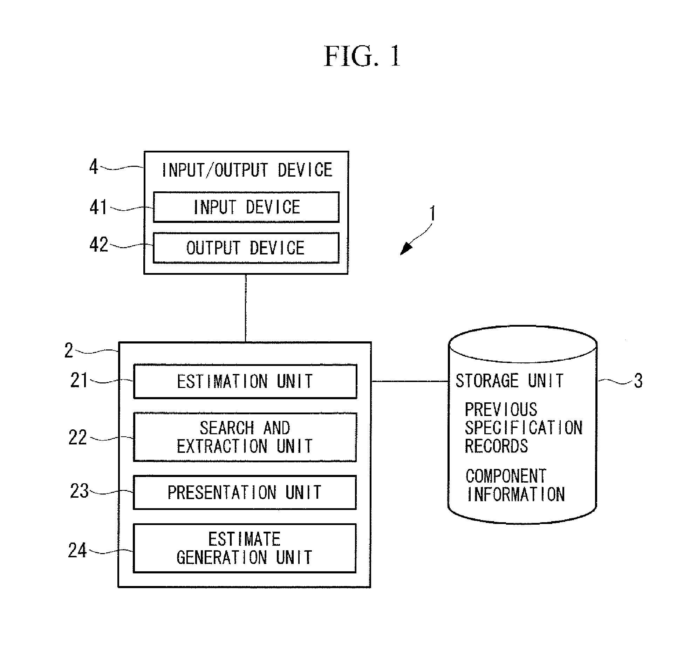

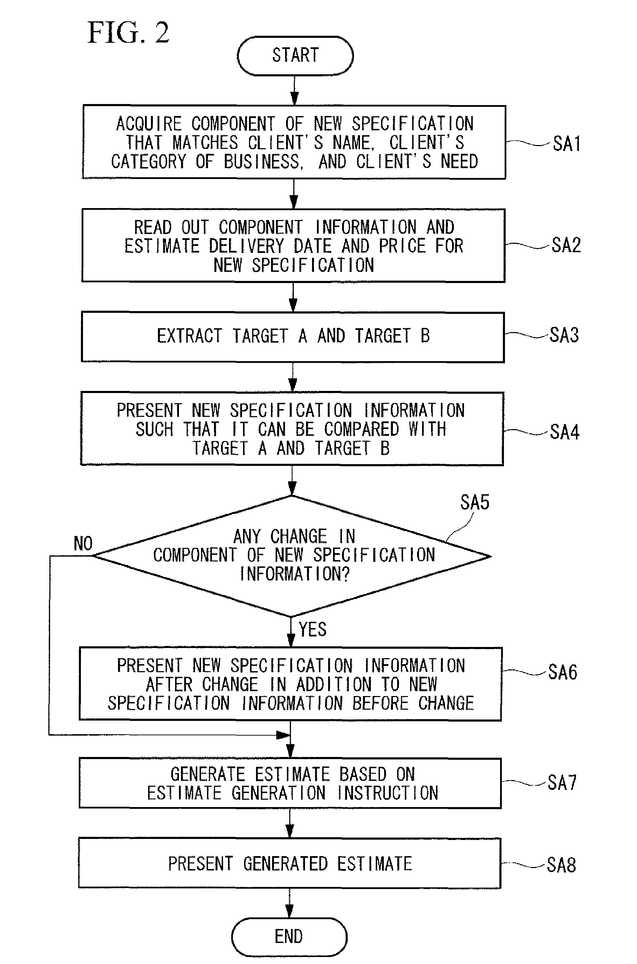

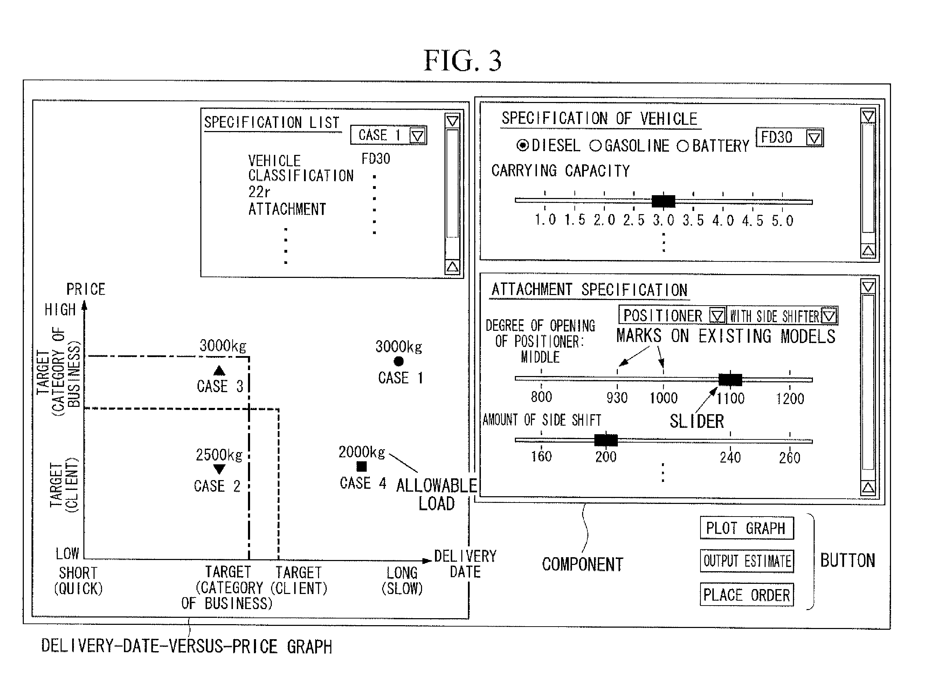

{FIG. 1} FIG. 1 is a functional block diagram showing, in outline, an example configuration of a specification setting system according to an embodiment of the present invention.
{FIG. 2} FIG. 2 is an operation flow of the specification setting system according to an embodiment of the present invention.
{FIG. 3} FIG. 3 is an example of a screen displayed on an input/output device.

### {Description of Embodiments}

An embodiment of a specification setting system, specification setting method, and specification setting program of the present invention will be described below with reference to the drawings. In the embodiment, a product including at least one component, which is an element meeting a need, is regarded as an industrial vehicle, and a description will be given assuming a case where the industrial vehicle is, for example, a forklift truck.

FIG. 1 is a block diagram showing, in outline, the configuration of a specification setting system according to this embodiment.
As shown in FIG. 1, a specification setting system 1 includes a specification setting unit 2, a storage unit 3, and an input/output device 4.
The storage unit 3 stores previous specification records, which include a previous specification that is set according to a previous need, and information about a delivery date and price for the previous specification, and component information, in which each component is associated with information about a delivery date and price of the component. More specifically, in the previous specification records, the component included in the previous specification, the delivery date, the price, the client's category of business, and the client's name are associated with each other.

The input/output device 4 includes an input device 41, such as a keyboard and a mouse, and an output device 42, such as a display and a printer. When information, such as the client's name, the client's category of business, and the component, which is the element meeting the client's need, is inputted by an operator or the like who operates the specification setting system 1, the input device 41 outputs the inputted information to the specification setting unit 2. The output device 42 indicates the information received from the specification setting unit 2 on a display or the like, presenting the information to the operator or the like of the specification setting system 1.

More specifically, the specification setting unit 2 includes an estimation unit (estimation means) 21, a search-and-extraction unit 22, a presentation unit (presentation means) 23, and an estimate generation unit (estimate generation means) 24.
The estimation unit 21 estimates a delivery date and price for a new specification, on the basis of the component information and the new specification, which is a specification meeting a new need. The estimation unit 21 also outputs information about the estimated delivery date and price for the new specification to the presentation unit 23.

The search-and-extraction unit 22 reads out, as delivery completion information, a previous specification that matches a predetermined comparison condition from the previous specification records stored in the storage unit 3. Herein, the predetermined comparison condition-unit a previous specification similar to the new specification, and an example is one having many components the same as those included in the new specification. The search-and-extraction unit 22 reads out, from the previous specification records stored in the storage unit 3, information about the delivery date and the price corresponding to the received client's name as a target A, and information about the delivery date and the price corresponding to the received information about the category of business as a target B. The search-and-extraction unit 22 outputs the thus read-out delivery completion information, the target A, and the target B to the presentation unit 23.

The presentation unit 23 presents the new specification information including the new specification, the delivery date for the new specification, and the price for the new specification, and the previous specification record that matches the predetermined comparison condition and that is read out of the storage unit 3 in a manner allowing comparison thereof. More specifically, the presentation unit 23 generates a delivery-date-versus-price graph whose axes correspond to the delivery date and the price and presents the new specification information (the delivery date and price for the new specification) and the previous specification record (the delivery completion information) in a manner allowing comparison thereof on the delivery-date-versus-price graph. Furthermore, the presentation unit 23 indicates the target A and the target B on the delivery-date-versus-price graph and presents the relationship between the targets A and B and the new specification information and the previous specification record, in a manner allowing comparison thereof.

FIG. 3 shows an example of a screen when the presentation unit 23 presents the new specification information and the previous specification record on the inpat/output device 4. In FIG. 3, components of the specification are indicated on the right side of the page, a list of specifications is indicated on the upper left side of the page, and the delivery-date-versus-price graph is indicated on the lower left side of the page. In FIG. 3, the horizontal axis represents the delivery date, showing longer delivery dates further to right side of the page, and the vertical axis represents the price, showing higher prices towards the upper side of the page. The dashed line in the graph represents the target A (the target price and delivery date determined from the client's name). If information about the delivery date and price for the new specification information is plotted close to the axes of the graph than this dashed line, it means that the delivery date and the price are within the target A.

The one-dot chain line in the graph represents the target B (the target price and delivery date determined from the category of business). If the information about the delivery date and price for the new specification information is plotted close to the axes of the graph than this one-dot chain line, the delivery date and the price are within the target B. When identification information (for example, case 1) of the specification that is to be indicated is chosen from the specification list, a component of the specification corresponding to the identification information is indicated on the right side.

When the new specification information is changed, the presentation unit 23 presents the new specification information after the change, in addition to the new specification information before the change. More specifically, when a presented-information changing unit detects that the component of the new specification information presented by the presentation unit 23 is changed, it outputs and presents the new specification information after the change, in addition to the new specification information before the change, to the output device 42. Furthermore, if there is any estimate generated by the estimate generation unit 24, the presentation unit 23 outputs and presents the estimate to the output device 42.

The estimate generation unit 24 generates a predetermined estimate on the basis of information about the component, price, and delivery date of the new specification presented by the presentation unit 23. More specifically, there is an estimate output button on the screen presented by the presentation unit 23, as shown in FIG. 3. When an operator operates the input device 41 and presses the estimate output button, an estimate generation instruction is inputted from the input/output device 4 to the specification setting system 1. The estimate generation unit 24 generates a predetermined estimate on the basis of the received estimate generation instruction. When the estimate generation instruction is inputted, the operator specifies the specification for which the estimate is generated. The estimate generation unit 24 then generates an estimate on the basis of the specified specification.

More specifically, the new specification information can be changed by the operator operating the input device 41 to change the component of the new specification information indicated on the output device 42. For example, a component of the new specification is shown in the attachment specification region in FIG. 3, and the amount of side shift indicates 200. The operator can change the new specification information by moving the slider bar, located at the position of 200, to the left or right by operating the input device 41 to increase or decrease the amount of side shift.

Next, how the specification setting system 1 according to this embodiment works will be described using FIGS. 1 to 3.
The operator operates the input/output device 4 to input a component of the new specification that matches the client's name, the client's category of business, and the client's need via the input/output device 4. When information about the component of the new specification is inputted to the estimation unit 21 (step SA1 in FIG. 2), the component information is read out of the storage unit 3, the delivery date and price for the new specification are estimated (step SA2 in FIG. 2), and the component, delivery date, and price of the new specification, serving as the new specification information, are outputted to the presentation unit 23. When the client's name and the client's category of business are inputted, the delivery date and price corresponding to the client's name are extracted, as the target A, on the basis of the previous specification records, the delivery date and price corresponding to the client's category of business are extracted, as the target B (step SA3 in FIG. 2), and the target A and the target B are outputted to the presentation unit 23.

The presentation unit 23 presents the received new specification information, and the target A for the new specification, corresponding to client's name, and the target B for the new specification, corresponding to the client's category of business, which are plotted on a graph in a manner allowing comparison thereof, and shows the graph on the input/output device 4 (step SA4 in FIG. 2). For example, from the delivery date and price estimated on the basis of the inputted new specification information, the new specification information is plotted at the position of case 1 on the delivery-date-versus-price graph in FIG. 3. The operator, while viewing the target A and the target B indicated on the output device 42, changes a component of the new specification information via the input device 41, such that the delivery date and price for the new specification information reach the target (at least one of the target A and the target B). For example, if a component X is changed to a component Y, information about the new component Y is inputted to the estimation unit 21, and the price and the delivery date when the component X of the prior new specification is changed to the component Y are newly estimated, on the basis of the component information read out of the storage unit 3.

The presentation unit 23 determines if a component of the new specification is changed (step SA5 in FIG. 2) and, if it is detected that a component is changed (for example, a change from the component X to the component Y), presents the new specification information after the change, including the component Y, in addition to the new specification information before the change, including the component X (step SA6 in FIG. 2), and outputs the information to the output device 42. Then, the new specification information before the change, including the component X, and the new specification information after the change, including the component Y, are indicated on the output device 42. For example, the new specification information after the change, including the component Y, is plotted at the position of case 2 in the delivery-date-versus-price graph of FIG. 3.

In this manner, the operator can confirm the price and the delivery date when the component X is changed to the component Y, by comparing the details outputted to the output device 42. Furthermore, because the target A targeted at the previous price and delivery date corresponding to the client and the target B targeted at the previous price and delivery date corresponding to the category of business are shown on the delivery-date-versus-price graph indicated on the output device 42, the operator can change the component such that the targets are approached. For example, by changing component several times, the specification that falls within the targets A and B, such as case 3 and case 4, is indicated in FIG. 3.

When the operator operates the input device 41 to input an estimate generation instruction, which is an instruction to operate an estimate on the basis of the specified new specification information, and when the estimate generation unit 24 receives the estimate generation instruction, an estimate is generated on the basis of the component, delivery date, and price included in the new specification information (step SA7 in FIG. 2). The generated estimate is outputted to the input/output device 4 via the presentation unit 23 (step SA8 in FIG. 2), completing this processing. Thus, the operator can obtain the estimate acquired from the specification setting system 1 via the output device 42. When an order button is provided, as shown in FIG. 3, the operator may press the order button to finalize the specified specification as the specification of the product and place an order for the component of the specified specification.

As has been described, even if a component is changed, because the new specification information after the change is immediately presented on the output device 42 in such a manner that it can be compared with the target, the prior new specification information, and the previous specification record, the operator can easily set a specification meeting the client's need by comparing the indicated pieces of information.

Although it is assumed that the processing is performed by hardware in the specification setting system according to the above-described embodiment, it does not necessarily have to be limited to such a configuration. For example, a configuration in which processing is performed by separate software is also possible. In such a case, the specification setting system includes a CPU, a main storage device, such as a RAM, and a computer-readable recording medium on which a program for performing all or a part of the above-described processing is recorded. The CPU reads out the program (specification setting program) recorded in the storage medium and executes information processing and calculation, thereby performing the same processing as the above-described specification setting system.
Examples of the computer-readable recording medium include a magnetic disk, a magneto-optical disk, a CD-ROM, a DVD-ROM, and a semiconductor memory. Furthermore, this computer program may be distributed to computers through communication lines, and the computers, upon receiving this program, may execute it.

As has been described above, with the specification setting system 1, specification setting method, and specification setting program according to this embodiment, the previous specification records, which include the previous specification that is set according to the previous need, and information about a delivery date and price for the previous specification, and the component information, in which each component of a product (for example, an industrial vehicle) is associated with a delivery date and price, are stored in the storage unit 3, and a delivery date and price for a specification meeting a new need are estimated on the basis of the component information read out of the storage unit 3. When the new specification information, which is presented such that it can be compared with the previous specification record read out of the storage unit 3, is changed, the new specification information after the change is presented, instead of the new specification information before the change.

Thus, because the previous specification and the new specification are presented, along with their corresponding delivery date and price, in a manner allowing comparison thereof, the price and delivery date for the new specification can be easily compared with those for the previous specification. Furthermore, because the new specification information after the change is presented in addition to the new specification information before the change, by, for example, changing a component of the new specification using the delivery date and price for the previous specification record as the target, the delivery date and price for the new specification can be adjusted so as to approach the target as closely as possible. Thus, the operator who sets the specification of a product can easily set a specification meeting the components, price, and delivery date required by the client.

Although the above-described specification setting system 1 according to this embodiment includes the specification setting unit 2, the storage unit 3, and the input/output device 4 in a single piece of hardware, the configuration is not limited thereto. For example, the specification setting unit 2, the storage unit 3, and the input/output device 4 may be connected to each other via a network and exchange information via the network.

### {Reference Signs List}

- 1: specification setting system
- 3: storage unit
- 21: estimation unit
- 23: presentation unit
- 24: estimate generation unit

## Claims

1. A specification setting system that sets a specification of a product including at least one component, which is an element meeting a need, the system comprising:
a storage unit for storing previous specification records, which include a previous specification that is set according to a previous need and information about a delivery date and price for the previous specification, and component information, in which each component is associated with information about a delivery date and price of the component;
an estimation unit for estimating a delivery date and price for a new specification on the basis of the component information and the new specification, which is a new specification meeting a new need; and
a presentation unit for presenting new specification information that includes the new specification and the delivery date and price for the new specification and a previous specification record that matches a predetermined comparison condition and that is read out of the storage unit in a manner allowing comparison thereof,
wherein, when the new specification information is changed, the presentation unit presents the new specification information after the change, in addition to the new specification information before the change.

2. The specification setting system according to Claim 1, wherein the presentation unit generates a graph whose axes correspond to the delivery date and the price and presents the new specification information and the previous specification record on the graph in a manner allowing comparison thereof.

3. The specification setting system according to Claim 1 or 2, further comprising an estimate generation unit that generates an estimate on the basis of information about the component, price, and delivery date of the new specification presented by the presentation unit.

4. A specification setting method for setting a specification of a product including at least one component, which is an element meeting a need, the method comprising:
an estimation stage of reading out component information from a storage unit for storing previous specification records, which include a previous specification that is set according to a previous need and information about a delivery date and price for the previous specification, and component information, in which each component is associated with information about a delivery date and price of the component, and estimating a delivery date and price for a new specification on the basis of the component information and the new specification, which is a new specification meeting a new need; and
a presentation stage of presenting new specification information that includes the new specification and the delivery date and price for the new specification and a previous specification record that matches a predetermined comparison condition and that is read out of the storage unit in a manner allowing comparison thereof, and, when the new specification information is changed, presenting the new specification information after the change, in addition to the new specification information before the change.

5. A specification setting program for setting a specification of a product including at least one component, which is an element meeting a need, and for causing a computer to execute:
estimation processing for reading out component information from a storage unit for storing previous specification records, which include a previous specification that is set according to a previous need and information about a delivery date and price for the previous specification, and component information, in which each component is associated with information about a delivery date and price of the component, and estimating a delivery date and price for a new specification on the basis of the component information and the new specification, which is a new specification meeting a new need; and
presentation processing for presenting new specification information that includes the new specification and the delivery date and price for the new specification and a previous specification record that matches a predetermined comparison condition and that is read out of the storage unit in a manner allowing comparison thereof, and, when the new specification information is changed, presenting the new specification information after the change, in addition to the new specification information before the change.
